Europäisches Patentamt

European Patent Office

Office européen des brevets

(19)

(11) Numéro de publication: **0 043 312**
**B1**

(12) **FASCICULE DE BREVET EUROPEEN**

(45) Date de publication du fascicule du brevet: **12.09.84**

(51) Int. Cl.³: **G 01 F 23/24**

(21) Numéro de dépôt: **81400998.1**

(22) Date de dépôt: **19.06.81**

(54) **Sonde de détection d'un niveau de liquide.**

(30) Priorité: **27.06.80 FR 8014377**

(43) Date de publication de la demande:
**06.01.82 Bulletin 82/01**

(45) Mention de la délivrance du brevet:
**12.09.84 Bulletin 84/37**

(84) Etats contractants désignés:
**DE GB IT**

(56) Documents cités:
**DE-A-2 718 295**
**FR-A-2 080 742**
**GB-A-1 096 025**
**GB-A-1 266 887**

(73) Titulaire: **e.d. VEGLIA**
**125, rue de Montreuil**
**F-75540 Paris Cedex 11 (FR)**

(72) Inventeur: **Coulange, Jean**
**20 rue des Alouettes**
**F-78700 Conflans Sainte-Honorine (FR)**

(74) Mandataire: **Bloch, Robert et al**
**39 avenue de Friedland**
**F-75008 Paris (FR)**

Courier Press, Leamington Spa, England.

EP 0 043 312 B1

## Description

La présente invention concerne une sonde de détection d'un niveau de liquide dans un réservoir, comprenant un fil conducteur dont la résistance présente un coefficient de température élevé.

Il est connu, pour la détection d'un niveau de liquide, de placer un fil conducteur à fort coefficient de température dans le réservoir et de lui appliquer un courant constant. Si le niveau de liquide est bas, le conducteur se trouve en grande partie dans l'air et sa température augmente, donc aussi sa résistance. Si au contraire, le conducteur est entièrement immergé dans le liquide, sa température est stable. La tension aux bornes du conducteur est donc représentative du niveau de liquide et par des moyens appropriés, on peut déterminer ce niveau.

Il est important en pratique qu'une variation du niveau de liquide entraîne une variation presque immédiate de la résistance du conducteur. Il est nécessaire de ce fait que l'inertie thermique du conducteur soit la plus faible possible et cela conduit à réaliser le conducteur sous la forme d'un fil très fin, donc très souple. Mais le fil doit alors être tendu par un organe approprié tel qu'un ressort.

En outre, pour des raisons évidentes de commodité, le fil forme au moins une paire de brins sensiblement parallèles fixés par leurs extrémités à des pièces de connexion, et le ressort agit sur le fil à la jonction des brins. Il faut donc prévoir un dispositif rigide pour maintenir à une extrémité les pièces de connexion et à l'extrémité opposée le ressort.

Comme l'enseigne le document GB—A— 1 266 887, on peut envisager de réaliser ce dispositif sous la forme d'un élément tubulaire de longueur un peu supérieure à celle d'un brin de fil, muni à une extrémité d'un moyen d'accrochage du ressort et à l'autre extrémité d'un moyen de fixation des pièces de connexion, le fil étant placé à l'intérieur dudit élément qui comporte des ouvertures permettant l'entrée du liquide. Un tel élément sera réalisé en deux moitiés que l'on réunira après le montage du fil.

L'inconvénient de cette solution est que la longueur de l'élément tubulaire doit être adaptée à la longueur des brins de fil. Or, cette dernière dépend elle-même de la profondeur du réservoir considéré et est donc variable selon les cas, de sorte qu'il faut prévoir pour chaque cas possible un modèle particulier d'élément tubulaire. Ceci est désavantageux du point de vue de la standardisation des fabrications.

L'invention vise par conséquent à procurer une sonde de détection de niveau dont la structure soit plus favorable sur le plan de la standardisation.

L'invention a pour object une sonde de détection d'un niveau de liquide, comprenant un fil conducteur dont la résistance présente un coefficient de température élevé, le fil formant au moins une paire de brins sensiblement parallèles, des lamelles de connexion adjacentes auxquelles sont fixées les extrémités du fil, un ressort agissant sur le fil à la jonction des brins, une entretoise tubulaire entourant le fil, et percée d'ouvertures sur sa paroi latérale, une pièce fixée à une extrémité de cette entretoise pour l'accrochage du ressort et une organe de fixation des lamelles de connexion, fixé à l'intérieur de l'entretoise tubulaire, du côté oppoé, caractérisée par le fait que l'extretoise tubulaire est ouverte à ses deux extrémités, et la pièce d'extrémité ainsi que l'organe de fixation sont agencés de façon à pouvoir être enfilés sur une broche de montage amovible, des moyens étant prévus pour permettre successivement l'enfilage sur la broche de la pièce d'extrémité puis de l'organe de fixation et enfin la venue en butée dudit organe defixation contre ladite broche.

Avec l'agencement selon l'invention, comportant une entretoise distincte des éléments d'accrochage du ressort et de fixation des lamelles de connexion, l'adaptation aux différentes profondeurs de réservoir est obtenue en modifiant la longueur de l'entretoise, qui est un simple tube. Mais la piéce d'extrémité et l'organe de fixation des lamelles de connexion n'ont pas à être modifié en fonction de la longueur du fil.

Le problème de l'introduction à l'intérieur de l'entretoise est résolu en assemblant préalablement les différents éléments et en enfilant la pièce d'extrémité et l'organe de fixation des lamelles de connexion sur une broche de montage. L'ensemble ainsi supportée est introduit sans difficultés à l'intérieur de l'entretoise tubulaire.

La broche présente une partie d'extrémité de section étroite sur laquelle se monte l'organe de fixation des lamelles de connexion et une partie de section plus large qui reçoit la pièce d'extrémité pour l'accrochage du ressort. Le raccordement de ces deux parties fournit une surface de butée sur laquelle peut prendre appui l'organe de fixation précité. Ce dernier est ainsi rendu solidaire de la broche au cours du montage.

La fixation de l'entretoise a lieu avantageusement par sertissage dans des évidements prévus sur la pièce d'extrémité et l'organe de fixation des pièces de connexion.

De façon appropriée, le ressort est tendu entre la pièce d'accrochage et une pièce intermédiaire autour de laquelle passe le fil, cette pièce intermédiare comportant une portée pour son guidage par la broche de montage.

De préférence, les ouvertures pour le passage de la broche sont de section rectangulaire. Ceci permet de fixer la position angulaire des différentes pièces au cours du montage.

La sonde selon l'invention est utilisable notamment pour la détection du niveau d'huile dans le carter moteur d'un véhicule automobile.

L'invention sera bien comprise à la lecture de la description ci-après d'un exemple de réalisation, faite en liaison avec les dessins joints.

Dans les dessins:

— la figure 1 montre en coupe axiale à grande échelle, la sonde détection selon l'invention dans un exemple de réalisation,

— la figure 2 est une coupe selon le plan II—II de la fig. 1,

— la figure 3 est une coupe selon le plan III—IIII de la fig. 1 d'une pièce de la sonde, la pièce étant représentée tournée de 90°,

— la figure 4 est une coupe selon le plan IV—IV de la fig. 1.

La sonde de détection de niveau de liquide représentée comprend un tube-entretoise rigide 1, par exemple en matière plastique, disposé verticalement dans un réservoir de liquide. L'une des extrémités du tube 1, à droite sur le dessin, n'est pas représentée. Des trous, non représentés, sont pratiqués, dans la paroi latérale du tube 1 pour permettre au liquide de pénétrer à l'intérieur du tube.

L'élément fonctionnel essentiel de la sonde est un fil 2 très fin conducteur de l'électricité, dont les extrémités sont reliées à des lamelles de connexion respectives 3a, 3b constituées par des lamelles de métal conducteur qui sont elles-mêmes reliées à des conducteurs de sortie, non représentés.

Le fil conducteur 2 est réalisé en une matière dont la résistivité présente un coefficient de température élevé, telle que le nickel-chrome. Suivant le niveau du liquide dans le réservoir, le degré d'immersion du fil 2 varie. Comme la partie exposée à l'air s'échauffe davantage que la partie plongée dans le liquide, la température du fil 2 varie suivant le niveau de liquide. Cette variation de température se traduit par une variation de la résistance électrique du fil, auquel par ailleurs un courant constant est appliqué, ce qui permet de déterminer par un circuit électrique approprié le niveau de liquide.

Le circuit électrique en question ne fait pas l'objet de la présente invention, et il est inutile de la décrire ici. Au demeurant, il appartient à l'état de la technique.

Pour que les variations de niveau se traduisent de façon quasi immédiate par des variations de la température du fil, il faut faire en sorte que l'inertie thermique du fil soit la plus faible possible et on utilise pour cette raison un fil très fin, donc aussi très souple.

Le fil 2 forme une boucle à deux brins 4a, 4b sensiblement parallèles. Les brins 4a, 4b sont reliés respectivement aux lamelles de connexion 3a, 3b, comportant chacune un téton 5 muni gorge 6 pour enrouler l'extrémité du brin respectif, la liaison définitive étant réalisée en déposant une goutte de soudure sur le téton 5.

Les lamelles 3a, 3b sont immobilisées entre deux pièces de fixation 7, 8 de section sensiblement semi-circulaire.

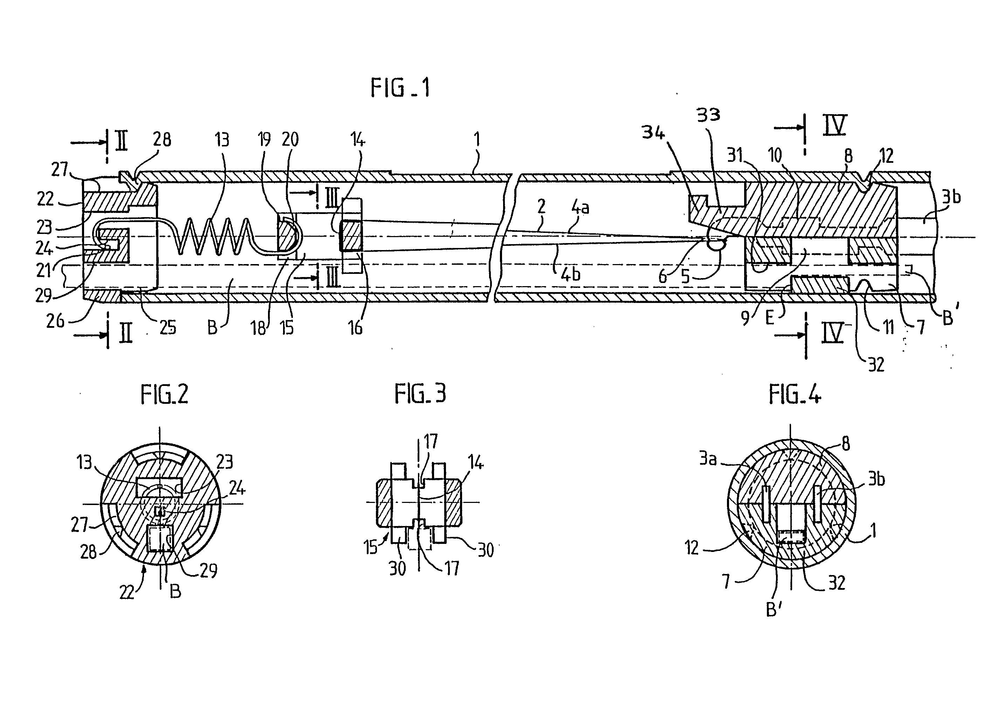

Comme le monte la fig. 1, les lamelles de connexion comportent sur leurs deux bords des parties en saillie 9, 10 de forme rectangulaire, qui sont engagées dans des évidements de forme correspondante prévus dans les pièces de fixation 7 et 8.

Les pièces de fixation 7 et 8 présentent une gorge 11 sur leur périphérie extérieure permettant le sertissage du tube 1 sur les pièces 7 et 8, par exemple en trois points 12 équidistants comme représenté à la fig. 4.

Le fil 2 est maintenu tendu par un ressort de traction 13 qui agit sur la boucle 14 joignant les deux brins 4a, 4b par l'intermédiaire d'un étrier 15. L'étrier 15 est une pièce rectangulaire creuse dont une paroi transversale 16 comporte deux petits évidements 17 pour recevoir la boucle 14. De façon analogue, l'autre paroi transversale 18 comporte des évidements 19 pour recevoir l'extrémité 20, en forme de boucle, du ressort 13.

L'extrémité opposée 21 du ressort 13, également en forme de boucle, est accrochée à une pièce d'extrémité 22. La pièce 22 présente une ouverture 23 que traverse le ressort 13 et un petit évidement 24 du côté extérieur, dans lequel est engagée la boucle d'extrémité 21.

La pièce 22 est de section sensiblement circulaire et comporte une partie étroite 25 côté ressort, de diamètre inférieur au diamètre intérieur du tube-entretoise 1, et une partie large 26 de diamètre supérieur au diamètre intérieur du tube 1, qui est en butée frontale sur l'extrémité du tube 1. Des encoches axiales 27 sont prévues dans une partie de la partie étroite 25 et dans la partie large 26 pour permettre le sertissage du tube 1 en des points 28, le diamètre au fond des encoches étant de façon appropriée inférieur au diamètre de la partie étroite 25.

La pièce d'extrémité 22 est traversée par une ouverture axiale de section carrée 29 permettant le passage d'une broche de montage de section carrée, représentée en pointillés sur les dessins et désignée par le repère B.

L'étrier 15 comporte des saillies 30 dans sa paroi transversale 16 définissant entre elles une porté de guidage pour la broche B, comme le montre la fig. 3.

La pièce de fixation 7 est agencé pour permettre le passage de l'extrémité B' de la broche, de section plus étroite, et pour être en butée sur l'épaulement E raccordant la partie à section carrée à la partie B'. Elle comporte à cet effet une ouverture 31 de section carrée débouchant sur la périphérie extérieure de la pièce 7, et une portion en pont 32 qui ferme en partie l'ouverture 31 de façon à faire butée sur ledit épaulement E et à n'autoriser le passage que du bout B' de la broche, de section plus étroite.

L'assemblage de la sonde comprend les opérations suivantes.

On soude les brins de fil 4a, 4b aux lamelles de connexion immobilisées entre les pièces 7 et 8 et reliées à des conducteurs de sortie, après avoir fait passer le fil dans l'étrier 15 pour former la boucle 14. On accroche le ressort 13 d'une part à l'étrier 15, d'autre part à la pièce d'extrémité 22.

On enfile la pièce d'extrémité 22, puis la pièce de fixation 7, sur la broche de montage B, jusqu'à ce que la pièce 7 se trouve en butée contre l'épaulement E de la broche. La broche B passe en outre entre les saillies 30 de l'étrier 15, qui est ainsi immobilisé angulairement.

On fait pénétrer l'ensemble ainsi porté par la broche à l'intérieur du tube-entretoise 1, jusqu'à ce que la partie large 26 de la pièce d'extrémité 22 entre en butée avec l'extrémité du tube 1. Etant donné que les pièces 7 et 8 sont solidaires en translation de la broche du fait de la butée entre la partie en pont 32 et l'épaulement E, elles occupent alors la position appropriée à l'intérieur du tube 1, correspondant à la tension correcte du fil conducteur 2.

On procède alors au sertissage du tube en 12 sur les pièces de fixation 7 et 8 munies de la gorge 11, et au sertissage de l'extrémité du tube 1 sur la pièce d'extrémité 22 dans les encoches 27. Puis la broche peut être retirée.

Il est clair que si la longueur du fil 2 doit être modifiée, seule la longueur du tube 1 devra être modifiée en conséquence. Les autres pièces pourront rester exactement les mêmes.

Il faut ajouter le fil conducteur 2 peut former plus d'une paire de brins, par exemple quatre brins. Pour cette éventualité, la pièce de fixation 8 comporte une patte 33 avec un ergot 34 autour duquel passera le fil.

## Revendications

1. Sonde de détection d'un niveau de liquide, comprenant un fil (2) conducteur dont la résistance présente un coefficient de température élevé, le fil (2) formant au moins une paire de brins (4a, 4b) sensiblement parallèles, des lamelles de connexion adjacentes (3a, 3b) auxquelles sont fixées les extrémités du fil (2), un ressort (13) agissant sur le fil (2) à la jonction des brins (4a, 4b) une entretoise tubulaire (1) entourant le fil (2), et percée d'ouvertures sur sa paroi latérale, une pièce (22) destinée à être fixée à une extrémité de cette entretoise (1) pour l'accrochage du ressort (13) et un organe de fixation (7, 8) des lamelles de connexion (3a, 3b), destiné à être fixé à l'intérieur de l'entretoise tubulaire (7), du côté opposé, caractérisée par le fait que l'entretoise tubulaire (1) est ouverte à ses deux extrémités, et la pièce d'extrémité (22) ainsi que l'organe de fixation (7, 8) sont agencés de façon à pouvoir être enfilés sur une broche de montage (B) amovible, des moyens étant prévus pour permettre successivement l'enfilage sur la broche (B) de la pièce d'extrémité (22) puis de l'organe de fixation (7, 8) et enfin la venue en butée dudit organe de fixation (7, 8) contre ladite broche (B).

2. Sonde selon la revendication 1, dans laquelle le pièce d'extrémité (22) et l'organe de fixation (7, 8) comportent des ouvertures axiales respectives de même section (29, 31) pour le passage de la broche de montage (B) et dans laquelle ladite broche (B) de montage présente une extrémité (B') de section réduite du côté de fixation (7, 8).

3. Sonde selon la revendication 2, dans laquelle ledit organe de fixation (7, 8) comporte, en outre, une ouverture étroite faisant suite à son ouverture (31) axiale et destinée au passage l'extrémité (B') de section réduite de la broche (B) de montage, une surface de butée (E) radiale pour la broche de montage (B) étant définie à la jonction de ladite ouverture axiale (31) et de ladite ouverture étroite de l'organe de fixation (7, 8).

4. Sonde selon l'une des revendications 1 à 3, dans laquelle la pièce d'extrémité (22) pour l'accrochage du ressort (13) et ledit organe de fixation (7, 8) sont pourvus d'évidement pour le sertissage de l'entretoise (1).

5. Sonde selon la revendication 4, dans laquelle l'organe de fixation (7, 8) comporte une gorge annulaire (11) pour le sertissage de l'entretoise (1).

6. Sonde selon l'une des revendications 4 et 5, dans laquelle la pièce d'extrémité (22) comporte une partie étroite (25) engagée à l'intérieur de l'entretoise (1) et une partie de plus grand diamètre raccordée par une surface radiale en butée sur la face d'extrémité de l'entretoise (7), des encoches (27) étant prévues dans la surface extérieure de la partie étroite (25) pour le sertissage de l'entretoise (7).

7. Sonde selon l'une des revendications 1 à 6, dans laquelle le ressort (13) est tendu entre la pièce d'accrochage (22) et une pièce intermédiaire (15) autour de laquelle passe le fil (2), cette pièce intermédiaire (15) comportant une saillie (30) pour son guidage par la broche de montage (B).

## Patentansprüche

1. Sonde für die Erfassung eines Flüssigkeitsniveaus, die enthält, einen einen hohen Widerstands-Temperaturkoefizienten aufweisenden leitenden Draht (2), der wenigstens ein Paar von im wesentlichen parallelen Trums (4a, 4b) bildet, angrenzenden Verbindungslamellen (3a, 3b), an denen die Enden des Drahtes (2) befestigt sind, eine auf die Verbindungsstelle der Trums (4a, 4b) des Drahtes (2) einwirkenden Feder (13), einen Rohrförmigen Zwischenträger (1), der den Draht (2) umhüllt und dessen Seitenwände von Öffnungen durchbrochen sind, ein Teil (22) bestimmt zur Befestigung an einem Ende des Zwischencenträgers (1) zum Einhaken der Feder (13) und ein im Inneren des rohrförmigen Zwischenträgers (1) auf der gegenüberliegenden Seite befestigtes Befestigungsteil (7, 8) für die Verbindungslamellen (3a, 3b), dadurch gekennzeichnet, daß der rohrförmige Zwischenträger (1) an seinen beiden Enden offen ist und daß Endstück (22) ebenso wie das Befestigungsteil (7, 8) derart angeordnet sind, daß sie auf einen wegnehmbaren Dorn aufgereiht werden können und daß Mittel vorgesehen sind, die das aufeinanderfolgende Aufreihen des Endstückes (22) und dann des Befestigungsteils (7, 8) erlauben, wobei das Befestigungsteil (7, 8) letztlich zum Anschlag gegen den Dorn (B) kommt.

2. Sonde nach Anspruch 1, dadurch gekennzeichnet, daß das Endstück (22) und das Befestigungsteil (7, 8) in sich entsprechenden Abschnitten für das Hindurchführen des Montagedorns (B) axiale Öffnungen (29, 31) aufweisen und daß der Montagedorn (B) auf der Seite des Befestigungsteils (7, 8) ein Ende (B') mit einem reduzierten Querschnitt aufweist.

3. Sonde nach Anspruch 2, dadurch gekennzeichnet, daß das Befestigungsteil (7, 8) desweiteren aufweist, eine sich an die axiale Öffnung (31) anschließende schmale Öffnung, bestimmt zur Durchführung des mit dem reduzierten Querschnitt versehenen Endes (B') des Montagedorns (B) und eine radiale Anschlagfläche (E) für den Montagedorn (B), die durch den Übergang der axialen Öffnung (31) in die schmale Öffnung des Befestigungsteil (7, 8) bestimmt ist.

4. Sonde nach einem der Ansprüche 1 bis 3, dadurch gekennzeichnet, daß das Endstück (22) für das Einhaken der Feder (13) und das Befestigungsteil (7, 8) mit Aussparungen für eine Kerbverbindung mit dem Zwischenträger (1) versehen sind.

5. Sonde nach Anspruch 4, dadurch gekennzeichnet, daß das Befestigungsteil (7, 8) eine Ringförmige Rille (11) für die Kerbverbindung mit dem Zwischenträger (1) aufweist.

6. Sonde nach einem der Ansprüche 4 und 5, dadurch gekennzeichnet, daß das Endstück (22) aufweist, einen schmalen mit dem Inneren des Zwischenstücks (1) in Anlage stehenden Abschnitt (25) und einen Abschnitt größeren Durchmessers, der über ein radiale Anschlagfläche mit der Endfläche des Zwischenträgers (1) in Verbindung steht und daß in der äußeren Oberfläche des schmalen Abschnittes (25) Einkerbungen (27) für die Kerbverbindung mit dem Zwischenträger (1) vorgesehen sind.

7. Sonde nach einem der Ansprüche 1 bis 6, dadurch gekennzeichnet, daß die Feder (13) zwischen dem Teil (22) zum Einhaken und einem von dem Draht (2) umschlungenen Zwischenteil (15) gespannt ist, wobei das Zwischenteil (15) für seine führung auf dem Montagedorn (B) Vorsprünge (30) aufweist.

## Claims

1. A sensor for detecting a level of liquid, comprising a conducting wire (2) whose resistance has a high coefficient of temperature, the wire (2) forming at least one pair of substantially parallel strands (4a, 4b), adjacent connecting plates (3a, 3b) to which the ends of the wire (2) are fixed, a spring (13) acting on the wire (2) at the junction of the strands (4a, 4b), a tubular spacer element (1) surrounding the wire (2), and pierced with openings over its side wall, a piece (22) adapted to be fixed at one end of this spacer element (1) for hooking the spring (13) and a member (7, 8) for fixing the connecting plates (3a, 3b) adapted to be fixed inside the tubular spacer element (1), on the opposite side, characterized in that the tubular spacer element (1) is open at its two ends and the end piece (22) as well as the fixing member (7, 8) are adapted to be fitted on a removable assembly spindle (B), means being provided for successively allowing fitting of said end piece (22) on said spindle (B) then of the fixing member (7, 8) and finally the abutment of said fixing member (7, 8) against said spindle (B).

2. The sensor of Claim 1, wherein the end piece (22) and the fixing member (7, 8) comprise axial openings respectively of the same section for the passage of the assembly spindle (B), said spindle (B) comprising an end (B') of smaller section towards the fixing member (7, 8).

3. The sensor of Claim 2, wherein the said fixing member (7, 8) further comprises a narrow opening following its axial opening (31) and providing for the passage of the end (B') of smaller section of spindle (B), a radial bearing surface (E) for the assembly spindle (B) being defined at the junction of said axial opening (31) and of said narrower opening of the fixing member (7, 8).

4. The sensor of one of the Claims 1 to 3, wherein the end piece (22) for hooking the spring (13) and said fixing member (7, 8) are provided with recesses for crimping the spacer element (1).

5. The sensor of Claim 4, wherein the fixing member (7, 8) comprises an annular groove (11) for crimping the spacer element (1).

6. The sensor of one of the Claims 4 and 5, wherein the end piece (22) comprises a narrow portion (25) engaged inside the spacer element (1) and a portion of larger diameter connected by a radial surface in abutment on the end face of the spacer element (1), notches (27) being provided in the outer surface of the narrow portion (25) for crimping the spacer element (1).

7. The sensor of one of the Claims 1 to 6, wherein the spring (13) is stretched between the hooking piece (22) and an intermediate piece (15) around which the wire (2) passes, this intermediate piece (15) comprising a projection (30) for guiding the assembly spindle (B).

FIG_1

FIG.2          FIG.3          FIG.4

0 043 312